Europäisches Patentamt

(19) European Patent Office

Office européen des brevets

(11) Numéro de publication: **0 068 932**
**B1**

(12) **FASCICULE DE BREVET EUROPEEN**

(45) Date de publication du fascicule du brevet:
25.09.85

(21) Numéro de dépôt: **82400995.5**

(22) Date de dépôt: **28.05.82**

(51) Int. Cl.⁴: **G 02 B  27/64,** F 41 G  1/40,
B 63 G  8/38

(54) Têtes de visée d'installations périscopiques, notamment pour sous-marins.

(30) Priorité: **02.06.81  FR 8110935**

(43) Date de publication de la demande:
**05.01.83 Bulletin 83/1**

(45) Mention de la délivrance du brevet:
**25.09.85 Bulletin 85/39**

(84) Etats contractants désignés:
**DE GB IT SE**

(56) Documents cités:
**EP - A - 0 031 781**
**FR - A - 1 329 532**
**FR - A - 1 439 999**
**US - A - 3 942 862**

(73) Titulaire: **SOCIETE D'APPLICATIONS GENERALES
D'ELECTRICITE ET DE MECANIQUE S A G E M, 6,
Avenue d'Iéna, F-75783 Paris Cedex 16 (FR)**

(72) Inventeur: **Barthelat, René, 11, rue Terray de Vindé,
F-96150 Taverny (FR)**
Inventeur: **Dore, Alain, 3, Impasse des Pincerals,
F-78700 Conflans Sainte Honorine (FR)**

(74) Mandataire: **Gorree, Jean-Michel et al, Cabinet
Plasseraud 84, rue d'Amsterdam, F-75009 Paris (FR)**

ACTORUM AG

## Description

La présente invention concerne des perfectionnements apportés aux têtes de visée d'installations périscopiques, notamment pour sous-marins, ces têtes de visée étant situées à l'extrémité supérieure d'un mât de périscope, et elle vise à perfectionner plus particulièrement celles de ces têtes de visée qui comportent au moins un ensemble de visée optique décalé latéralement par rapport à l'axe du mât de l'installation périscopique, l'ensemble de visée optique étant disposé sur un support mobile à deux axes gyrostabilisés pour diriger les signaux optiques parallèlement à l'axe optique de l'optique d'entrée du mât du périscope.

Lorsqu'une installation périsopique est disposée à bord d'un mobile animé d'un mouvement de balancement (par exemple roulis et/ou tangage pour un sous-marin), il en résulte pour la tête de visée de ladite installation périscopique un déplacement amplifié dans la proportion de la longueur du mât qui la porte. De ce fait, toute observation à l'aide de l'installation périscopique est difficile; en particulier, dans le cas d'un sous-marin en plongée à faible profondeur, il est impossible, en pratique, de faire le point par la méthode du sextant à travers cette installation périscopique instable.

Le brevet FR-A-1 329 532 décrit, certes, un dispositif pour faciliter l'observation au moyen de dispositifs optiques de visée ou d'observation fournissant une image stabilisée par un support mobile à deux axes gyrostabilisés, pour diriger les signaux optiques parallèlement à l'axe du dispositif optique de visée ou d'observation.

Toutefois, en appliquant ce dispositif connu à une installation périscopique, les déplacements imposés à l'ensemble de visée optique, par rapport au mât, par la gyrostabilisation risqueraient, en conservant un ensemble optique de dimensions restreintes compatibles avec la faible place disponible dans une tête de visée périscopique, de provoquer une déviation trop importante des signaux optiques transmis qui ne pénètreraient alors plus, en tout ou partie, dans le mât.

L'invention a donc pour but de perfectionner les têtes de visée d'installation périscopique en question de manière qu'elles donnent mieux satisfaction, dans les diverses conditions de leur utilisation, que les têtes de visée jusqu'ici employées, et notamment de concevoir des têtes de visée qui autorisent une observation même lorsque le mobile, notamment le sous-marin, qu'elles équipent est animé d'un mouvement tel qu'un mouvement de balancement, par exemple, de roulis et/ou de tangage.

Conformément à l'invention, on prévoit, à ces fins que, en combinaison avec les moyens ci-dessus, un dispositif de correction de trajectoire est interposé sur le trajet des signaux optiques délivrés par l'ensemble de visée optique et est asservi à l'azimut de l'ensemble de visée optique de manière telle que les signaux optiques soient transmis au mât sensiblement selon l'axe optique de l'optique d'entrée de celui-ci.

Une installation périscopique équipée d'une tête de visée agencée conformément à l'invention procure une très grande facilité d'observation dans la mesure où sont éliminés, au moins en partie, les inconvénients dus aux mouvements indésirables du mobile. Notamment, dans le cas d'un sous-marin en plongée à faible profondeur et donc susceptible d'être soumis à des mouvements de roulis et/ou de tangage, la tête de visée périscopique de l'invention procure une stabilité de l'image qui améliore considérablement l'observation; en particulier, il est désormais possible d'effectuer le point par la méthode du sextant par l'intermédiaire de l'installation périscopique, ce qui n'était pas réalisable de façon courante jusqu'ici; il est également possible d'utiliser des appareils de contrôle et/ou d'observation et/ou de mesure, disposés à l'intérieur du sous-marin, qui assurent leur fonction par l'intermédiaire de l'installation périscopique (par exemple, veille par caméra infra-rouge).

Avantageusement, lorsque l'ensemble de visée optique est destiné à couvrir en azimut un champ angulaire donné, le dispositif de correction de trajectoire des signaux optiques est constitué par une lame à faces parallèles dont l'orientation est asservie à la stabilisation en azimut du mât de l'installation périscopique et qui est disposée de manière à être perpendiculaire au faisceau lumineux lorsque l'ensemble de visée est orienté dans l'axe du champ sus-indiqué.

Dans une application préférée, la tête de visée présentant l'une ou l'autre des caractéristiques ci-dessus conformes à l'invention comprend un second ensemble de visée, les deux ensembles de visée étant disposés de ppart et d'autre de l'axe du mât de l'installation périscopique et portés par le même support à deux axes gyrostabilisés.

L'invention sera mieux comprise à la lecture de la description détaillée qui suit d'un mode de réalisation préféré donné uniquement à titre d'exemple non limitatif; dans cette description, on se réfère aux dessins annexés sur lesquels:

la figure 1 est une vue schématique d'une installation périscopique équipée d'une tête de visée périscopique agencée conformément à l'invention;

la figure 2 montre, en perspective schématique, les éléments principaux de la tête de visée conforme à l'invention,

les figures 3 et 4 montrent, respectivement en coupe par des plans perpendiculaires, le gyroscope de la tête de visée conforme à l'invention, et

les figures 5 et 6 montrent, de façon schématique, une partie de la tête de visée de la figure 2 respectivement dans deux positions fonctionnelles distinctes.

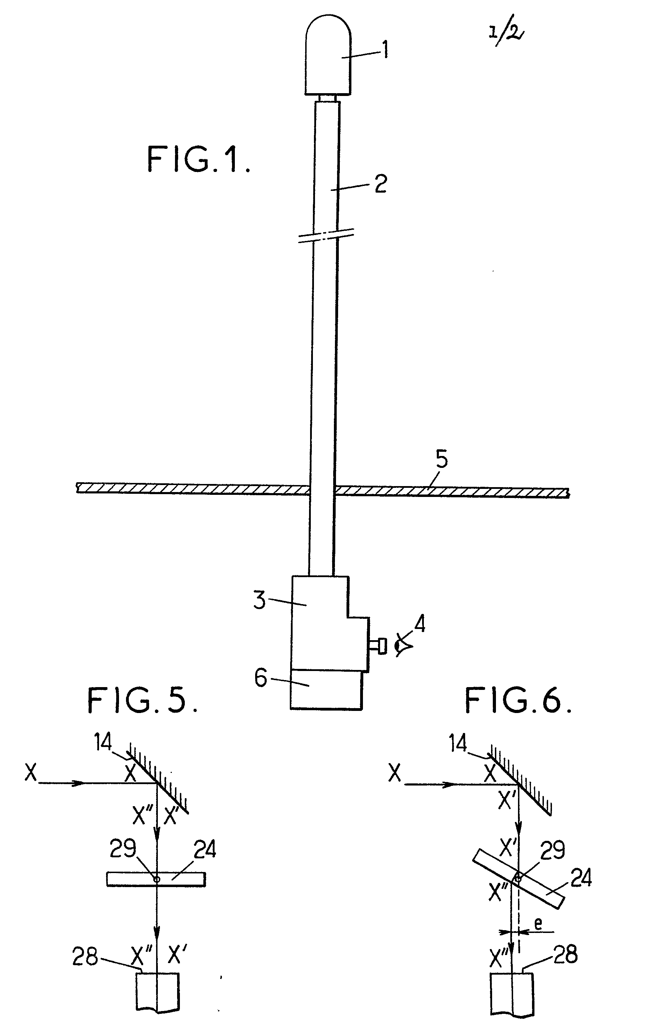

En se reportant tout d'abord à la figure 1, on y a représenté schématiquement, pour fixer les idées, une installation périscopique, pour sous-marin comprenant une tête de visée 1 portée à l'extrémité supérieure d'un mât 2 (représenté en position hissée pour l'observation). En outre, un poste d'observation 3 ou boîte oculaire, situé à l'intérieur du sous-marin, est agencé pour recevoir les signaux optiques acheminés à travers le mât 2 depuis la tête de visée 1 et pour, par exemple, en permettre l'observation directe par un observateur 4.

Sur la figure 1, on a représenté une installation périscopique classique, dans laquelle le mât 2 traverse de façon étanche la coque épaisse 5 du sous-marin et supporte à son extrémité inférieure le poste d'observation 3. Toutefois, bien entendu, d'autres configurations sont possibles pour la transmission des signaux optiques à travers la coque 5, sans pour autant sortir du cadre de l'invention.

Toujours à titre d'exemple, on suppose que l'installation périscopique de la figure 1 est agencée pour fonctionner avec des rayonnements lumineux visibles, qui peuvent être transmis directement à l'observateur 4 à travers le poste d'observation 3 à l'aide d'une optique appropriée (non représentée), et avec des rayonnements infra-rouges qui sont traités dans un appareillage 6 avant d'être renvoyés dans le poste d'observation 3.

Sans sortir du cadre de l'invention, il peut être prévu, outre des moyens pour l'observation directe par l'observateur 4, des moyens d'enregistrement, de visualisation, etc., de l'image.

Bien entendu, l'installation périscopique comporte également tous les organes auxiliaires classiques (non représentés), tels que ceux destinés à assurer le support étanche du mât, à assurer la commande des déplacements axiaux et de rotation du mât, à entraîner et à guider le mât dans ses mouvement, etc.

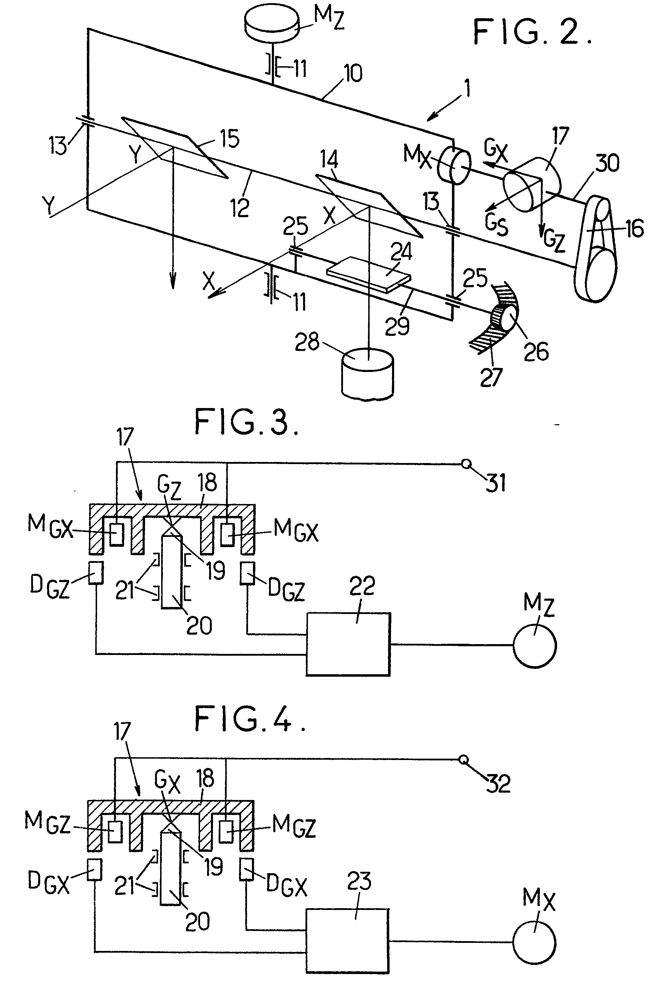

Sur la figure 2 on a représenté, en perspective schématique, les éléments principaux de la tête de visée 1 conforme à l'invention.

Cette tête de visée 1 comporte un premier cadre 10 monté pivotant, par l'intermédiaire de paliers 11, autour d'un axe vertical, un moteur d'asservissement en azimut $M_z$ étant prévu pour faire tourner le susdit premier cadre 10 autour de son axe de pivotement vertical.

Un second cadre 12 est monté pivotant, par l'intermédiaire de paliers 13, sur le premier cadre 10 autour d'un axe horizontal, un moteur d'asservissement en site $M_X$ étant prévu pour faire tourner le susdit second cadre 12 autour de son axe de pivotement horizontal.

Ce second cadre 12 porte un ensemble de visée optique 14, généralement constitué par un miroir ou un prisme, décalé par rapport à l'axe de pivotement vertical du cadre 10.

Ce second cadre 12 porte également un ensemble de visée complémentaire 15, dont il sera plus explicitement question ci-après, qui est également décalé par rapport à l'axe de pivotement vertical du cadre 10 (les ensembles de visée 14 et 15 peuvent par exemple être disposés symétriquement par rapport à l'axe vertical du cadre 10).

Pour l'asservissement en site de ce second cadre 12 à l'aide du moteur d'asservissement en site $M_X$, il est prévu un dispositif de démultiplication 16 procurant, entre le moteur d'asservissement $M_X$ et le second cadre 12, un rapport de démultiplication de 1/2.

Ceci étant et pour stabiliser l'ensemble de visée optique 14 ainsi que l'ensemble de visée complémentaire 15, un gyroscope à deux degrés de liberté 17, dont l'un des axes de sensibilité $G_X$ est parallèle à l'axe horizontal de pivotement du second cadre 12, dont l'axe de rotation $G_S$ est parallèle à la ligne de visée XX ou YY respectivement de l'ensemble de visée optique 14 ou de l'ensemble de visée complémentaire 15, et dont l'axe de sensibilité $G_Z$ est perpendiculaire aux axes $G_X$ et $G_S$, est porté par l'arbre 30 du moteur $M_X$ entraînant le dispositif de démultiplication 16.

Ce gyroscope 17 comporte, comme montré sur les figures 3 et 4, un rotor 18 porté, par l'intermédiaire d'un joint de Hoocke 19, par un arbre 20 maintenu par des paliers 21.

Deux détecteurs de position en azimut $D_{GZ}$ sont prévus ainsi qu'un moteur couple de précession en site $M_{GX}$ (figures 3).

De même, deux détecteurs de position en site $D_{GX}$ sont prévus, ainsi qu'un moteur couple de précession en azimut $M_{GZ}$ (figure 4).

Les deux détecteurs de position en azimut $D_{GZ}$ délivrent des signaux qui sont démodulés et amplifiés dans une cellule 22 et qui commandent le moteur d'asservissement en azimut $M_z$ du premier cadre 10 (figure 3).

Les deux détecteurs de position en site $D_{GX}$ délivrent des signaux qui sont démodulés et amplifiés dans une cellule 23 et qui commandent le moteur d'asservissement en site $M_X$ du second cadre 12.

L'orientation de l'axe de rotation $G_S$ du gyroscope est réalisée par des signaux de commande d'attitude appliqués en 31 au moteur couple de précession en site $M_{GX}$ et en 32 au moteur couple de précession en azimut $M_{GZ}$.

Conformément à l'invention et comme montré sur la figure 2, le premier cadre 10 comporte un dispositif de correction de trajectoire 24 coopérant avec l'ensemble de visée optique 14 et monté pivotant, par l'intermédiaire des paliers 25, autour d'un axe 29 parallèle à l'ace de pivotement du second cadre 12.

Ce dispositif de correction de trajectoire 24 est interposé sur le trajet des signaux optiques délivrés par l'ensemble de visée optique 14 et il est asservi à l'azimut du premier cadre 10. A cet effet, il est avantageux de prévoir, sur l'axe de pivotement du dispositif de correction de trajectoire 24, un pignon 26 engrenant avec une crémaillère circulaire 27 située dans un plan perpendiculaire à l'axe de rotation vertical du cadre 10 et centrée sur ledit axe, cette crémaillère circulaire 27 étant solidaire du mât portant l'optique d'entrée 28.

Le dispositif de correction de trajectoire 24 a pour fonction de faire en sorte que le rayon optique parvenant suivant l'axe optique XX à l'ensemble de visée optique 14 et réfléchi par ledit ensemble soit envoyé à l'optique d'entrée 28 du mât en étant en permanence dirigé selon l'axe de cette optique (et donc du mât) quels que soient les déplacements de rotation imprimés à l'ensemble de visée 14 par le système de stabilisation.

Afin de conserver une structure simple et peu coûteuse à la tête de visée, le dispositif de correction de trajectoire 24 peut être constitué par une lame à faces parallèles solidaires de l'axe 29.

Pour un déplacement azimutal nul de l'ensemble de visée 14 (figure 15), l'axe optique de réflexion X'X' dudit ensemble coïncide avec l'axe optique X''X'' de l'optique d'entrée 28 du mât. La lame à faces parallèles 24 est maintenue perpendiculaire à l'axe X'X' et à l'axe X''X''.

Par contre, lorsque l'ensemble de visée 14 a subi un déplacement azimutal sous l'action du système de stabilisation (figure 6), les axes optiques X'X' et X''X'' ne sont plus coïncidants. En raison de l'asservissement de l'inclinaison de la lame 24 à l'azimut du premier cadre 10, les rayons lumineux traversant la lame 24 subissent une double réfraction entraînant un décalage latéral de leur trajectoire correspondant à l'écart e existant entre les axes X'X' et X''X''.

L'asservissement de la lame 24 à l'azimut du premier cadre 10, l'épaisseur de la lame et l'indice de réfraction de son matériau constitutif sont à choisir pour obtenir les déviations souhaitées du rayon lumineux en fonction des déplacements de l'axe X'X' provoqués par le système de stabilisation.

Un ensemble de visée optique 14 stabilisé conformément à l'invention peut typiquement couvrir un champ angulaire azimutal de ±20°.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

## Revendications

1. Tête de visée (1) d'installation périscopique, notamment pour sous-marin, ladite tête étant située à l'extrémité supérieure d'un mât (2) de périscope et comportant au moins un ensemble de visée optique (14) décalé latéralement par rapport à l'axe de pivotement du mât de l'installation périscopique, l'ensemble de visée optique (14) étant disposé sur un support mobile (10) à deux axes gyrostabilisés (Gx, Gs) pour diriger les signaux optique, reçus par l'ensemble de visée optique (14) parallèlement à l'axe optique de l'optique d'entrée (28) du mât périscopique – pour stabiliser en azimut et en site l'image fournie par l'ensemble de visée optique décalé lorsque le mât est animé d'un mouvement de balancement–, caractérisé en ce qu'un dispositif (24) de correction de trajectoire est interposé sur le trajet des signaux optiques délivrés par ledit ensemble de visée optique et est asservi à l'azimut de l'ensemble de visée optique (14) de manière telle que les susdits signaux optiques soient transmis au mât sensiblement selon l'axe optique de l'optique d'entrée (28) de celui-ci.

2. Tête de visée selon la revendication 1, caractérisée en ce que – l'ensemble de visée optique étant destiné à couvrir en azimut un champ angulaire donné – le dispositif de correction de trajectoire est constitué par une lame à faces parallèles (24) dont l'orientation est asservie à la stabilisation en azimut du mât (2) de l'installation périscopique et qui est disposée de manière à être perpendiculaire aux rayons lumineux qui traversent cette lame lorsque l'ensemble de visée optique est orienté dans l'axe du susdit champ.

3. Tête de visée selon la revendication 2, caractérisée en ce qu'elle comprend un second ensemble de visée (15), les deux ensembles de visée étant disposés de part et d'autre de l'axe du mât de l'installation périscopique et portés par le support à deux axes gyrostabilisés.

4. Installation périscopique, notamment pour sous-marin, caractérisée en ce qu'elle est équipée d'une tête de visée selon l'une quelconque des revendications 1 à 3.

## Patentansprüche

1. Visierkopf (1) einer Periskopanlage, u.a. für ein U-Boot, am oberen Ende eines Periskopmasts (2) sitzend und bestehend aus mindestens einer optischen Visiereinheit (14), die seitlich der Drehachse des Masts der Periskopanalge versetzt ist, wobei die optische Visiereinheit (14) auf einer beweglichen Stütze (10) mit zwei drallstabilisierten Achsen(Gx, Gs) angeordnet ist, um die von der optischen Einheit (14)empfangenen optischen Signale parallel zur optischen Achse der Eingangsoptik (28) des Periskopmasts zu richten, um Azimut und Standort des von der optischen, versetzten Visiereinheit gegebenen Bildes zu stabilisieren, wenn der Mast schwankt, dadurch gekennzeichnet, dass eine Flugbahnkorrektureinrichtung (24) auf der Bahn der von der genannten optischen Visiereinheit erzeugten optischen Signale zwischengeschaltet und von dem Azimut der optischen Visiereinheit (14) abhängig ist, so dass die oben genannten optischen Signale dem Mast etwa in der optischen Achse seiner Eingangsoptik (28) übertragen werden.

2. Visierkopf nach Anspruch 1, dadurch gekennzeichnet, dass – in Anbetracht dessen, dass die optische Visiereinheit einen bestimmten Azimutbereich decken soll – die Flugbahnkorrektureinheit aus einer Lamelle (24) mit parallelen Flächen besteht, deren Orientierung von der Azimutstabilisation des Mastes (2) der Periskopanlage abhängt und die senkrecht zu den Lichtstrahlen, die sie durchqueren, steht, wenn die optische Visiereinheit in der Achse des genannten Feldes orientiert ist.

3. Visierkopf nach Anspruch 2, dadurch gekennzeichnet, dass er eine zweite Visiereinheit (15) aufweist, wobei die beiden Visiereinheiten jeweils auf beiden Seiten der Mastachse der Periskopeinrichtung angeordnet und von der Stütze mit zwei drallstabilisierten Achsen getragen sind.

4. Periskopanlage, u.a. für U-Boote, dadurch gekennzeichnet, dass sie mit einem Visierkopf nach einem der Ansprüche 1–3 ausgerüstet ist.

## Claims

1. A sighting head (1) in a periscope installation, particularly in a submarine, said sighting head being located at the upper end of a periscope mast (2) and comprising at least one optical sighting unit (14) laterally out of alignment with respect to the axis of the mast of the periscope installation, the optical sighting unit (14) being positioned on a movable support (10) with two gyrostabilized axles (Gx, Gs) so as to direct the optical signals, received by the optical sighting unit (14), parallel to the optical axis of the inlet optical unit (28) of the periscope mast – so as to stabilize in azimuth and elevation the image provided by the out of alignementoptical sighting unit when the mast is swinging–, characterized in that a trajectory correction device (24) is interposed in the path of the optical signals supplied by said optical sighting unit and is coupled to the azimuth of the optical sighting unit (14) so that said optical signals are transmitted to the mast substantially along the optical axis of the inlet optical unit (28) thereof.

2. Sighting bead according to claim 1, characterized in that – the optical sighting unit being intended to cover in asimuth a given angular field – the trajectory correction device is constituted by a parallel-sided plate (24) whose orientation is coupled to the stabilization in azimuth of the mast of the periscope installation and which is positioned so as to be perpendicular to the light rays propagating through said plate when the optical sighting unit is oriented in the axis of the above said field.

3. Sighting head according to claim 2, characterized in that it comprises a second sighting unit (15), the two sighting units being positioned on each side of the axis of the mast of the periscope installation and being borne by the support with two gyrostabilized axles.

4. Periscope installation, particularly in a submarine, characterized in that it is provided with a sighting head according to anyone of claims 1 to 3.

# FIG.1.

# FIG.5.

# FIG.6.

FIG. 2.

FIG.3.

FIG.4.